# EUROPÄISCHE PATENTSCHRIFT

(11) **EP 3 414 409 B1**
(45) Veröffentlichungstag und Bekanntmachung des Hinweises auf die Patenterteilung: **26.02.2020**
(21) Anmeldenummer: 17705318.8
(22) Anmeldetag: 03.02.2017
(51) Int. Cl.: E04C 5/07, B29C 70/52, B29C 35/08

(54) **VERFAHREN ZUR HERSTELLUNG VON ANKERSTÄBEN AUS EINEM FASERVERBUNDMATERIAL SOWIE ANKERSTAB**
METHOD FOR PRODUCING ANCHOR RODS FROM A FIBER COMPOSITE MATERIAL, AND ANCHOR ROD
PROCÉDÉ DE FABRICATION DE BARRES D'ANCRAGE À PARTIR D'UN MATÉRIAU COMPOSITE RENFORCÉ DE FIBRES ET BARRE D'ANCRAGE

(30) Priorität: 09.02.2016 DE 102016102194
(43) Veröffentlichungstag der Anmeldung: 19.12.2018
(73) Patentinhaber: Leonhardt, Andrä und Partner Beratende Ingenieure VBI AG, 70469 Stuttgart (DE)
(72) Erfinder: PLANERT, Andreas, 09131 Chemnitz (DE)
(74) Vertreter: Habermann Intellectual Property Partnerschaft von Patentanwälten mbB
(86) Internationale Anmeldenummer: PCT/EP2017/052327
(87) Internationale Veröffentlichungsnummer: WO 2017/137313

(56) Entgegenhaltungen:
- EP-A2- 0 427 111
- WO-A1-2014/183146
- JP-A- H05 147 117
- JP-A- H06 293 079

## Beschreibung

Die Erfindung betrifft ein Verfahren zur Herstellung von Ankerstäben aus einem Faserverbundmaterial, wobei in einem Verfestigungsschritt ein Strang aus einem aushärtbaren Matrixmaterial, in welchem Fasern eingebettet sind, einer Bestrahlungseinrichtung zugeführt und durch eine Bestrahlung mit Licht verfestigt wird, und wobei der verfestigte Strang in eine Temper-Einrichtung weitergefördert und in einem nachfolgenden Aushärtungsschritt durch Erwärmung auf eine Tempertemperatur ausgehärtet wird, wobei ein Abschnitt des ausgehärteten Strangs einen Ankerstab bildet.

Ein beispielsweise für eine Bewehrung oder Verankerung von Betonelementen verwendeter Ankerstab wird in der Praxis regelmäßig aus Metall hergestellt. Durch eine geeignete Oberflächenstrukturierung, beispielsweise in Umfangsrichtung oder in einem Winkel hierzu verlaufende wulstförmige Ausformungen und nutenartigen Vertiefungen, kann eine formschlüssige Verbundwirkung zwischen einem derartigen Ankerstab und einem Betonelement erzeugt werden, in welches der Ankerstab eingebettet ist. Im Gegensatz zu Ankerstäben mit einer geeigneten Oberflächenprofilierung kann mit Ankerstäben, die eine glatte Staboberfläche aufweisen, nur eine deutlich geringere Verbundwirkung erzielt werden, die für eine Verwendung solcher Stäbe zur Bewehrung und Verankerung von Betonelementen regelmäßig nicht ausreichen kann.

Es wurden vereinzelt Versuche unternommen, derartige Ankerstäbe aus einem Faserverbundmaterial herzustellen. Ein aus einem geeigneten Faserverbundmaterial hergestellter Ankerstab kann ein geringes Eigengewicht und gleichzeitig eine hohe mechanische Belastbarkeit aufweisen. Zudem weist ein Ankerstab aus einem Faserverbundmaterial eine sehr gute Widerstandsfähigkeit gegenüber Feuchtigkeit und Witterungseinflüssen auf.

In JP H06 293079 A und EP 0 427 111 A2 sind Verfahren zur Herstellung von Ankerstäben aus Faserverbundmaterialien offenbart, bei welchen ein Strang aus einem Faserverbundmaterial eingebettet in einem aushärtbaren Matrixmaterial einer Bestrahlungseinrichtung zugeführt und der Strang durch eine Bestrahlung mit Licht verfestigt wird. Bei dem in JP H06 293079 A beschriebenen Verfahren wird von der Bestrahlungseinrichtung UV-Licht und bei dem in EP 0 427 111 A2 beschriebenen Verfahren IR-Licht zur Verfestigung des Strangs eingesetzt.

Bei den in WO 2014/183146 A1 und JP H05 147117 beschriebenen Verfahren zur Herstellung von Ankerstäben wird ausgehend von einem in einem aushärtbaren Material eingebetteten Strang aus Faserverbundmaterialien der Strang zunächst einer Bestrahlungseinrichtung zugeführt und durch eine Bestrahlung mit Licht verfestigt, um darüber hinaus anschließend in einem Aushärtungsschritt durch Erwärmung auf eine Tempertemperatur in einer Temper-Einrichtung ausgehärtet zu werden.

Beispielsweise aus der Veröffentlichung "Verbundverhalten von GFK-Bewehrungsstäben und Rissentwicklung in GFKstabbewehrten Betonbauteilen" von Herrn Raimo Füllsack-Köditz (Institut für konstruktiven Ingenieurbau Bauhaus-Universität Weimar, November 2004) sind verschiedene Verfahren beschrieben, mit denen eine Oberflächenprofilierung von einem stabförmigen Faserverbundmaterial bewirkt werden kann. Die Staboberfläche kann beispielsweise durch Sandbestrahlung aufgeraut werden. Es ist ebenfalls möglich, die Staboberfläche durch eine Sandbeschichtung mit einer Oberflächenprofilierung zu versehen. Eine deutlich stärker variierende Oberflächenprofilierung kann durch eine schlaffe oder straffe Umseilung der Stäbe mit Fasern oder durch eine Verflechtung der in einem Ankerstab eingebetteten Fasern bewirkt werden. Es ist auch denkbar, dass ein Ankerstab mit einer zunächst glatten Oberfläche nachträglich durch Einfräsen einer Nutenstruktur oder durch die Ausbildung einer vorspringenden Rippenstruktur mit Hilfe von zusätzlich aufgebrachtem Kunstharz eine Oberflächenprofilierung erhält.

Nachträglich aufgebrachte Rippenstrukturen aus Kunstharz, die keine Anbindung an die in dem Ankerstab eingebetteten Fasern aufweisen, können bereits bei einer geringen Zug- oder Druckbelastung abgeschert werden. Durch das Einfräsen einer Rippen- oder Gewindestruktur in einen zunächst mit einer glatten Staboberfläche hergestellten Ankerstab werden die in diesem Bereich verlaufenden Fasern beschädigt oder aufgetrennt und die Faserverbundwirkung innerhalb des Ankerstabs insbesondere in dem Bereich der Oberflächenprofilierung erheblich geschwächt. Es hat sich gezeigt, dass die mit einem derartigen Verfahren mit einer Oberflächenprofilierung versehenen Ankerstäbe für viele Anwendungsbereiche keine ausreichende Verbundwirkung mit einem umgebenden Betonelement erzeugen, bzw. gewährleisten können. Es ist derzeit technisch kaum möglich, ausgehend von einem glatten Ankerstab eine Oberflächenprofilierung nachträglich zu erzeugen, die eine ausreichende Verbundwirkung für Ankerstäbe in Betonelementen bewirken bzw. gewährleisten kann.

Der für eine Aushärtung des Matrixmaterials benötigte Zeitaufwand ist erheblich. Das Erzeugen der Oberflächenprofilierung ist bei den bekannten Herstellungsverfahren und insbesondere bei einer schlaffen oder straffen Umseilung der Ankerstäbe oder bei dem Verflechten der in dem Ankerstab eingebetteten Fasern während deren Herstellung sehr aufwendig und kostenintensiv. Auch aus diesen Gründen werden trotz der vorteilhaften Eigenschaften derartige Ankerstäbe aus einem Faserverbundmaterial, die eine sehr hohe Zugfestigkeit aufweisen und im Gegensatz zu Ankerstäben aus Metall unempfindlich gegenüber Witterungseinflüssen sind, in der Praxis kaum für Baumaßnahmen oder Sanierungsmaßnahmen eingesetzt.

Es wird deshalb als eine Aufgabe der vorliegenden Erfindung angesehen, ein möglichst einfach und kostengünstig durchführbares Verfahren zur Herstellung von Ankerstäben aus einem Faserverbundmaterial bereitzustellen.

Diese Aufgabe wird erfindungsgemäß dadurch gelöst, dass der Strang in dem Verfestigungsschritt auf einem umlaufenden Transportband in einer in einer Förderrichtung durchgehenden Vertiefung des Transportbands an oder in der Bestrahlungseinrichtung vorbeigefördert wird. Durch die Verwendung eines Matrixmaterials, das durch eine Bestrahlung mit Licht verfestigt werden kann, kann innerhalb kurzer Zeit der Strang aus zunächst flüssigem, bzw. pastösem Matrixmaterial mit den darin eingebetteten Fasern verfestigt und dabei in die gewünschte Form gebracht werden. Die derzeit bekannten Matrixmaterialien, die eine Verfestigung durch Bestrahlung mit beispielsweise UV-Licht oder sichtbarem Licht ermöglichen, bewirken allerdings üblicherweise keine ausreichend feste und mechanisch belastbare Verbindung des Matrixmaterials mit den darin eingebetteten Fasern. Zudem können in Abhängigkeit von den jeweils verwendeten Fasern Abschattungseffekte auftreten, die insbesondere in einer unmittelbaren Umgebung um die Fasern eine Verfestigung des Matrixmaterials durch die Bestrahlung mit Licht beeinträchtigen. Es hat sich gezeigt, dass durch einen anschließenden Temper-Vorgang, bei dem der zuvor durch Bestrahlung mit Licht verfestigte Strang auf eine Temper-Temperatur erwärmt wird und über eine ausreichend lange Zeit dauerhaft temperiert wird, eine zusätzliche Aushärtung des Matrixmaterials und damit einhergehend eine ausreichende mechanische Belastbarkeit des Ankerstabs bewirkt, so dass der Ankerstab zur Bewehrung und Verankerung von Betonelementen verwendet werden kann.

Durch die Bestrahlung des noch verformbaren Strangs mit Licht, insbesondere mit UV-Licht, kann innerhalb von einer sehr kurzen Bestrahlungsdauer von beispielsweise zwei bis fünf Minuten der Strang ausreichend verfestigt und mit einer vorgegebenen Oberflächenprofilierung versehen werden. Nach der Verfestigung kann der Strang in einfacher Weise gehandhabt, bzw. transportiert und gelagert werden, um nachfolgend einer Temperiereinrichtung zugeführt zu werden, mit welcher der Aushärtungsschritt durchgeführt wird. Eine unbeabsichtigte Verformung des bereits verfestigten Strangs ist dadurch während des Aushärtungsschritts ausgeschlossen. Würde der Strang ausschließlich durch Erwärmung in der Tempereinrichtung verfestigt und ausgehärtet werden, würde es erheblich länger dauern, bis das Matrixmaterial in dem Strang ausreichend verfestigt ist, um anschließend in einfacher Weise und ohne die Gefahr einer unerwünschten Verformung transportiert und gelagert werden zu können. Durch die Kombination der Verfestigung des Strangs durch eine Bestrahlung mit Licht und eine anschließend durchgeführte Aushärtung durch Erwärmung werden die Vorteile einer sehr raschen Verfestigung des Strangs mit einer dadurch erleichterten Handhabung kombiniert mit der insbesondere für Ankerstäbe erforderlichen Aushärtung und mechanisch hoch belastbaren Einbettung der Fasern in das ausgehärtete Matrixmaterial.

Um in einfacher Weise während des Verfestigungsschritts den Strang formen und beispielsweise hinsichtlich seines Durchmessers vorgeben zu können wird der Strang in dem Verfestigungsschritt auf einem umlaufenden Transportband in einer in einer Förderrichtung durchgehenden Vertiefung des Transportbands an einer Bestrahlungseinrichtung vorbeigeführt. Die Vertiefung in dem Transportband kann beispielsweise eine rechteckige, eine U-förmige oder eine halbkreisförmige Querschnittsfläche aufweisen. Es ist ebenfalls denkbar, dass die in Förderrichtung durchgehende Vertiefung in dem Transportband eine näherungsweise rechteckige oder kreisförmige Querschnittsfläche und einen längs der Förderrichtung verlaufenden schmalen Öffnungsschlitz aufweist, sodass das Transportband den Strang auch an einer dem Öffnungsschlitz zugewandten Oberseite teilweise umgreift und dadurch auch an einer Oberseite des Strangs dessen Formgebung vorgeben kann.

Weiterhin ist denkbar und für verschieden Anwendungsfälle zweckmäßig, dass die durchgehende Vertiefung keinen geraden Verlauf längs der Förderrichtung aufweist, sondern beispielsweise einen wellenförmigen oder mäanderförmigen Verlauf aufweist, so dass auch der darin verfestigte Strang und der daraus hergestellte Ankerstab einen wellenförmigen oder mäanderförmigen Verlauf aufweist, um dadurch eine Verankerungswirkung zu erzeugen.

Ein derartiger Ankerstab kann für die Bewehrung von Betonelementen und Betonbauten verwendet werden. Der Ankerstab kann auch beispielsweise für eine Verankerung einzelner Formteile miteinander oder eines einzelnen Bauteils an einem Bauwerk verwendet werden, wobei der Ankerstab nicht vollständig in ein Formteil oder Bauteil eingebettet sein muss, sondern gegebenenfalls lediglich mit einem Abschnitt, üblicherweise einem Endabschnitt mit dem Formteil oder Bauteil in Eingriff steht. Der erfindungsgemäße Ankerstab eignet sich in vorteilhafter Weise für die Aufnahme und Übertragung von Zugkräften.

Vorzugsweise ist vorgesehen, dass der Strang kontinuierlich der Bestrahlungseinrichtung zugeführt wird. Die mit dem Matrixmaterial getränkten und benetzten bzw. ummantelten Fasern können zu einem Strang zusammengeführt und kontinuierlich der Bestrahlungseinrichtung zugeführt werden, um in einem kontinuierlichen Herstellungsprozess einen verfestigten Endlos-Strang zu produzieren. Durch die Verwendung eines geeigneten Matrixmaterials, das eine durch Licht und insbesondere durch UV-Bestrahlung aktivierbare Verfestigung innerhalb von wenigen Minuten ermöglicht, kann der Endlos-Strang mit einer daran angepassten Transportgeschwindigkeit an einer Beleuchtungseinrichtung oder an mehreren Beleuchtungseinrichtungen innerhalb der Bestrahlungseinrichtung vorbeigeführt und dabei verfestigt werden. Die Verwendung von gesonderten Werkzeugen für die Herstellung der einzelnen Ankerstäbe und insbesondere ein manuelles Einlegen von Fasern in einzelne Formen, bzw. Werkzeuge, mit denen jeweils ein einzelner Ankerstab hergestellt werden kann, ist nicht erforderlich. Da während des Verfestigungsschritts bereits eine gewünschte Oberflächenprofilierung erzeugt werden kann, ist kein zusätzlicher Aufwand für eine anderenfalls erforderliche schlaffe oder straffe Umwicklung oder für eine nachträgliche Erzeugung der Oberflächenprofilierung notwendig.

Im Hinblick auf die kontinuierliche Herstellung von Ankerstäben ist es gemäß einer Ausgestaltung des Erfindungsgedankens vorteilhaft, dass in einem Durchtränkungsschritt ein Bündel von Fasern mit dem Matrixmaterial durchtränkt und zu einem Strang zusammengeführt wird, der nachfolgend der Bestrahlungseinrichtung zugeführt wird. Die einzelnen Fasern können dabei beispielsweise von einer Vorratstrommel oder von mehreren Vorratsrollen abgewickelt und über mehrere Umlenkungsrollen umgelenkt und dabei zunächst mit dem Matrixmaterial durchtränkt und anschließend der Bestrahlungseinrichtung zugeführt werden. Bei den Fasern kann es sich beispielsweise um Fasern aus Glas, aus Aramid oder aus Kohlenstoff handeln. Es ist grundsätzlich denkbar, Fasern aus natürlichen bzw. nachwachsenden Rohstoffen wie beispielsweise Hanf oder Flachs zu verwenden. Besonders vorteilhaft für die Verwendung in Ankerstäben sind Fasern aus einem Basaltmaterial. Es ist ebenfalls möglich, dass verschiedenartige Fasern zu einem Bündel bzw. zu dem Strang zusammengeführt und verbunden werden.

In besonders vorteilhafter Weise ist vorgesehen, dass die Fasern des Bündels voneinander beabstandet einem Tränkungsbehälter mit dem Matrixmaterial zugeführt werden, und die mit Matrixmaterial ummantelten Fasern in dem Tränkungsbehälter oder nach dem Verlassen des Tränkungsbehälters zu dem Strang zusammengeführt werden. Durch die Zuführung von zunächst aufgefächerten und voneinander beabstandeten Fasern kann in einfacher Weise erreicht werden, dass die einzelnen Fasern während des Durchtränkungsschritts ausreichend Kontakt mit dem Matrixmaterial haben und im Wesentlichen vollständig von dem Matrixmaterial umgeben, benetzt und ummantelt werden, bevor die einzelnen Fasern zu dem Bündel zusammengeführt werden, das nachfolgend den Strang bildet.

Es ist zweckmäßig, dass die Vertiefung des Transportbands profilierte Innenwandbereiche aufweist, durch welche während des Verfestigungsschritts eine Oberflächenprofilierung des darin geförderten Strangs vorgegeben wird. Die profilierten Innenwandbereiche können sich dabei kontinuierlich über die gesamte Vertiefung, bzw. über die gesamte Länge des umlaufenden Transportbands erstrecken. Es ist ebenfalls möglich, dass im Wesentlichen glatte Innenwandbereiche sich mit profilierten Innenwandbereichen abwechseln. Die Oberflächenprofilierung kann dabei beispielsweise durch quer zur Förderrichtung oder in einem Winkel hierzu verlaufende Wulste und Nuten in den Innenwandbereichen erzeugt werden. Es ist ebenfalls möglich, dass die profilierten Innenwandbereiche eine wellenförmige Oberflächenprofilierung aufweisen, die auf den Strang abgeformt und übertragen wird. Es hat sich gezeigt, dass mehrere Zähne oder Wulste pro Zentimeter Länge des Ankerstabs, die etwa 1 bis 2 Millimeter radial vorspringen, eine für viele Anwendungsbereiche ausreichende Verbundwirkung mit einem Betonelement erzeugen können. Flache, rechteckige Stabprofile mit einer zahnförmigen oder wellenförmigen Profilierung an den schmalen Seitenwänden sind besonders vorteilhaft für eine Verwendung als Bewehrung sehr dünner plattenartiger Betonbauteile geeignet. Weitgehend unabhängig von einer Querschnittsfläche und Formgebung eines Stabprofils kann ein derartiger Ankerstab in zahlreichen Anwendungsfällen für eine hochfeste und zuverlässige Bewehrung von Betonelementen und Betonbauten verwendet werden.

Die Oberflächenprofilierung kann dabei an den jeweiligen Anwendungsfall angepasst werden, um eine möglichst hohe Verbundwirkung und Kraftübertragung mit einer damit verbundenen Komponente zu ermöglichen. So kann bei einer Verwendung als Ankerstab in Betonelementen die Oberflächenprofilierung beispielsweise an verschiedene Zusammensetzungen des Betons angepasst sein. Es ist ebenfalls möglich, an einem Ende des Ankerstabs ein Krafteinleitungselement bzw. ein Zugmittel festzulegen und die Oberflächenprofilierung des Ankerstabs an dem vorgesehenen Verbindungsbereich an das Krafteinleitungselement oder Zugmittel anzupassen.

Um bereits während des Verfestigungsschritts eine möglichst gleichmäßige Verfestigung des Matrixmaterials um die einzelnen Fasern herum zu bewirken ist vorgesehen, dass das Transportband aus einem lichtdurchlässigen Material besteht und dass mehrere Beleuchtungseinrichtungen den auf dem Transportband geförderten Strang aus verschiedenen Richtungen beleuchten. Das Transportband kann beispielsweise aus einem transparenten oder opaken Silikonmaterial bestehen. Die mehreren Beleuchtungseinrichtungen können dann den in dem Transportband in der Vertiefung aufgenommenen und geförderten Strang nicht nur von oben durch einen Öffnungsschlitz hindurch, sondern auch quer zur Förderrichtung beispielsweise von den Seiten oder von einer Unterseite mit sichtbarem Licht oder mit UV-Licht beleuchten und dadurch verfestigen.

Einer Ausgestaltung des Erfindungsgedankens zufolge ist vorgesehen, dass über eine Dosiereinrichtung vor dem Verfestigungsschritt dem Strang zusätzliches Matrixmaterial zugegeben wird. Dies kann zweckmäßig sein, um unabhängig von einem gegebenenfalls vorausgehenden Durchtränkungsschritt ein gewünschtes Mischungsverhältnis von Matrixmaterial und von darin eingebetteten Fasern für den Strang, bzw. einen davon gebildeten Ankerstab vorgeben zu können. Durch die Dosiereinrichtung kann auch gewährleistet werden, dass die Vertiefung in dem Transportband vollständig mit Matrixmaterial aufgefüllt wird. Auf diese Weise kann vermieden werden, dass unbeabsichtigt während der kontinuierlichen Herstellung des verfestigten Strangs lokale Unregelmäßigkeiten und Bereiche mit zu wenig Matrixmaterial entstehen, die zu einer lokalen Schwächung des Strangs und des daraus gebildeten Ankerstabs führen könnten.

Es ist ebenfalls möglich, mit der Dosiereinrichtung ein Füllmaterial zuzugeben, wobei das Füllmaterial einen Anteil des Matrixmaterials aufweisen kann, jedoch auch aus einem anderen Material oder aus einem Gemisch bestehen kann und zusätzlich mit Zuschlagstoffen angereichert sein kann. Als Zuschlagstoffe können beispielsweise Kunststoffgranulate, Sand, mineralische Zuschlagsstoffe oder Glasgranulat zugegeben werden, um die Eigenschaften des daraus hergestellten Ankerstabs zu beeinflussen.

Es ist vorgesehen, dass der Strang vor, während oder nach dem Aushärtungsschritt in mehrere Abschnitte unterteilt wird, die jeweils einen Ankerstab bilden. Da für einen vollständigen Aushärtungsvorgang üblicherweise eine Verweildauer von mehreren Stunden in der Tempereinrichtung erforderlich oder zumindest zweckmäßig ist, kann der kontinuierlich erzeugte und verfestigte Endlos-Strang vor der Zuführung in die Temper-Einrichtung in einzelne Ankerstäbe mit der jeweils vorgesehenen Länge zertrennt werden. Die einzelnen Ankerstäbe können dann raumsparend gestapelt und einem beheizbaren Innenraum der Tempereinrichtung zugeführt werden.

Nachfolgend werden Ausführungsbeispiele des Erfindungsgedankens näher erläutert, die in der Zeichnung exemplarisch dargestellt sind. Es zeigt:
Fig. 1 eine schematische Darstellung des Verfahrensablaufs für die kontinuierliche Herstellung von Ankerstäben mit einer Oberflächenprofilierung aus einem Faserverbundmaterial,
Fig. 2 eine schematische Darstellung eines Bündels von Fasern, das in einem Durchtränkungsschritt mit dem Matrixmaterial durchtränkt und ummantelt wird, und
Fig. 3 eine schematische Darstellung eines endlosen umlaufenden Transportbands, das in einer Förderrichtung eine durchgehende Vertiefung für die Aufnahme des durchtränkten Bündels von Fasern während eines Verfestigungsschritts ermöglicht.

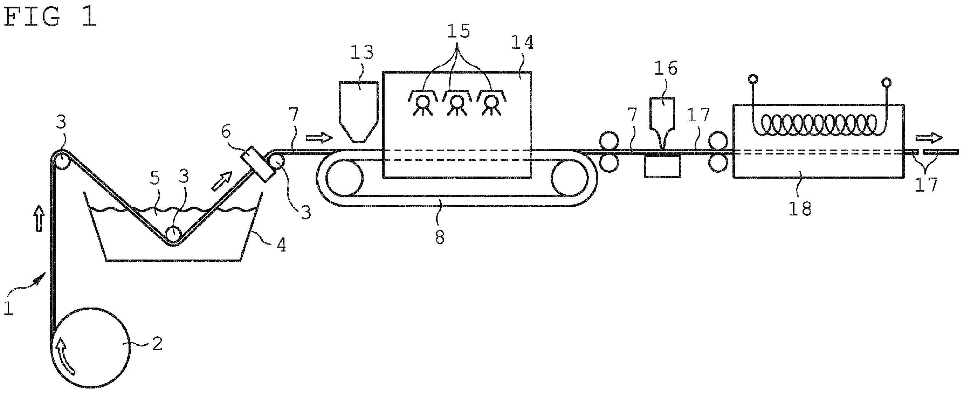

Bei einem erfindungsgemäßen und in Fig. 1 schematisch dargestellten Herstellungsverfahren werden mehrere Fasern 1 von einer Vorratstrommel 2 abgewickelt und über mehrere Umlenkungsrollen 3 durch einen Tränkungsbehälter 4 geführt, der mit einem zunächst noch flüssigem oder pastösem Matrixmaterial 5 gefüllt ist. Die einzelnen Fasern 1 werden nach dem Benetzen und Ummanteln mit dem Matrixmaterial 5 in dem Tränkungsbehälter 4 einer Bündelungseinrichtung 6 zugeführt, mit deren Hilfe, die einzelnen Fasern 1 zu einem Strang 7 gebündelt werden.

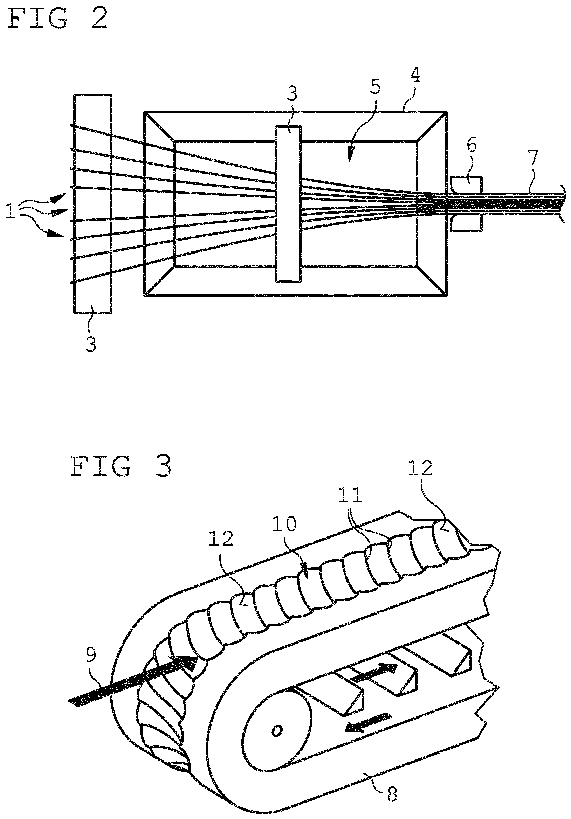

In Fig. 2 ist schematisch dargestellt, dass die einzelnen Fasern 1 zunächst aufgefächert und jeweils im Abstand zu benachbarten Fasern 1 dem Tränkungsbehälter 4 zugeführt werden, sodass jede Faser 1 beabstandet zu den anderen Fasern 1 in das Matrixmaterial 5 eintaucht und vollständig von dem Matrixmaterial 5 umgeben bzw. benetzt wird. Die einzelnen benetzten Fasern 1 werden nach dem Verlassen des Tränkungsbehälters 4 mit der Bündelungseinrichtung 6 zu dem Strang 7 gebündelt.

Der Strang 7 wird anschließend einem endlos umlaufenden Transportband 8 zugeführt. Das Transportband 8, das in Fig. 3 ausschnittweise vergrößert dargestellt ist, weist eine in einer mit Pfeilen 9 verdeutlichten Förderrichtung durchgehende Vertiefung 10 auf. Die Vertiefung 10 weist ununterbrochen eine wellenförmige Oberflächenprofilierung 11 der Innenwandbereiche 12 auf.

Nachdem der Strang 7 der Vertiefung 10 in dem Transportband 8 zugeführt wurde, wird mit einer Dosierungseinrichtung 13 zusätzlich Matrixmaterial 5 in die Vertiefung 10 eingeführt, um die Vertiefung 10 vollständig aufzufüllen und eine Abformung der Oberflächenprofilierung 11 der Innenwandbereiche 12 der Vertiefung 10 auf den darin eingebetteten Strang 7 zu begünstigen bzw. zu gewährleisten.

Der Strang 7 wird mit dem Transportband 8 einer Bestrahlungsanlage 14 zugeführt. In der Bestrahlungseinrichtung 14 sind mehrere UV-Beleuchtungseinrichtungen 15 angeordnet. Die einzelnen Beleuchtungseinrichtungen 15 sind abweichend von der schematischen Darstellung in Fig. 1 so angeordnet und ausgerichtet, dass sie das Transportband 8 und den darin in der Vertiefung 10 aufgenommenen Strang 7 aus mehreren verschiedenen Richtungen quer zu der Förderrichtung 9 beleuchten.

Das Transportband 8 ist aus einem transparenten und elastischen Silikonmaterial hergestellt. Die Beleuchtungseinrichtungen 15 können den Strang 7 deshalb nicht nur von oben, sondern auch seitlich durch das Transportband 8 hindurch mit UV-Licht bestrahlen und dadurch verfestigen. Eine Länge der Bestrahlungseinrichtung 14 bzw. die Anordnung der einzelnen Beleuchtungseinrichtungen 15 und eine Transportgeschwindigkeit, mit welcher das Transportband 8 umläuft und den Strang 7 durch die Bestrahlungseinrichtung 14 hindurch fördert, sind so aufeinander abgestimmt und vorgegeben, dass der Strang 7 durch die Beleuchtung in der Bestrahlungseinrichtung 14 ausreichend verfestigt wird, bis er die Bestrahlungseinrichtung 14 wieder verlässt.

Nach dem Verlassen der Bestrahlungseinrichtung 14 wird der Strang 7 durch eine Trenneinrichtung 16 in einzelne Abschnitte unterteilt, die jeweils einen Ankerstab 17 bilden. Die einzelnen Ankerstäbe 17 werden einer Temper-Einrichtung 18 zugeführt, in welcher die Ankerstäbe 17 auf die vorgesehene Temper-Temperatur erwärmt und für die Dauer des Aushärtungsvorgangs auf dieser Temper-Temperatur gehalten werden, bis das Matrixmaterial 5 vollständig oder zumindest für die vorgesehene Verwendung als Ankerstab 17 ausreichend ausgehärtet ist.

Da die einzelnen Ankerstäbe 17 bereits eine Oberflächenprofilierung aufweisen und ausreichend verfestigt sind, so dass bei der weiteren Handhabung und insbesondere während des Aushärtungsschritts keine ungewollte Verformung der Ankerstäbe 17 mehr befürchtet werden muss, können mehrere Ankerstäbe 17 der Temper-Einrichtung 18 zugeführt und dort raumsparend beispielsweise gestapelt oder in einem Revolvermagazin gelagert werden, bis der Aushärtungsvorgang abgeschlossen ist. Die mit dem erfindungsgemäßen Verfahren beispielsweise in einer Stunde herstellbare Stückzahl von Ankerstäben wird dann nicht mehr durch den Aufwand einer manuellen oder automatisierten Bestückung einzelner Werkzeugformen oder durch die oftmals mehrere Stunden dauernde Verweildauer in der Temper-Einrichtung 18 begrenzt, sondern maßgeblich durch die maximal mögliche Transportgeschwindigkeit bei der Strangherstellung und der Verweildauer in der Bestrahlungseinrichtung 14 vorgegeben, die oftmals nur wenige Minuten dauert.

## Patentansprüche

1. Verfahren zur Herstellung von Ankerstäben (17) aus einem Faserverbundmaterial, wobei in einem Verfestigungsschritt ein Strang (7) aus einem aushärtbaren Matrixmaterial (5), in welchem Fasern (1) eingebettet sind, einer Bestrahlungseinrichtung (14) zugeführt und durch eine Bestrahlung mit Licht verfestigt wird, und wobei der verfestigte Strang (7) in eine Temper-Einrichtung (18) weitergefördert und in einem nachfolgenden Aushärtungsschritt durch Erwärmung auf eine Tempertemperatur ausgehärtet wird, wobei ein Abschnitt des ausgehärteten Strangs (7) einen Ankerstab (17) bildet, **dadurch gekennzeichnet, dass** der Strang (7) in dem Verfestigungsschritt auf einem umlaufenden Transportband (8) in einer in einer Förderrichtung (9) durchgehenden Vertiefung (10) des Transportbands (8) an oder in der Bestrahlungseinrichtung (14) vorbeigefördert wird.

2. Verfahren nach Anspruch 1, **dadurch gekennzeichnet, dass** der Strang (7) kontinuierlich der Bestrahlungseinrichtung (14) zugeführt wird.

3. Verfahren nach Anspruch 1 oder Anspruch 2, **dadurch gekennzeichnet, dass** in einem Durchtränkungsschritt ein Bündel von Fasern (1) mit dem Matrixmaterial (5) durchtränkt und zu dem Strang (7) zusammengeführt wird, der nachfolgend der Bestrahlungseinrichtung (14) zugeführt wird.

4. Verfahren nach Anspruch 3, **dadurch gekennzeichnet, dass** die Fasern (1) des Bündels voneinander beabstandet einem Tränkungsbehälter (4) mit dem Matrixmaterial (5) zugeführt werden, und die mit Matrixmaterial (5) ummantelten Fasern (1) in dem Tränkungsbehälter (4) oder nach dem Verlassen des Tränkungsbehälters (4) zu dem Strang (7) zusammengeführt werden.

5. Verfahren nach einem der vorangehenden Ansprüche, **dadurch gekennzeichnet, dass** die Vertiefung (10) des Transportbands (8) profilierte Innenwandbereiche (11) aufweist, durch welche während des Verfestigungsschritts eine Oberflächenprofilierung des darin beförderten Strangs (7) bewirkt wird.

6. Verfahren nach einem der vorangehenden Ansprüche, **dadurch gekennzeichnet, dass** das Transportband (8) aus einem lichtdurchlässigen Material besteht und dass mehrere Beleuchtungseinrichtungen (15) den auf dem Transportband (8) geförderten Strang (7) aus verschiedenen Richtungen beleuchten.

7. Verfahren nach einem der vorangehenden Ansprüche, **dadurch gekennzeichnet, dass** über eine Dosiereinrichtung (13) dem Strang (7) vor dem Verfestigungsschritt zusätzliches Matrixmaterial (5) zugegeben wird.

8. Verfahren nach einem der vorangehenden Ansprüche, **dadurch gekennzeichnet, dass** der Strang (7) vor, während oder nach dem Aushärtungsschritt in mehrere Abschnitte unterteilt wird, die jeweils einen Ankerstab (17) bilden.

## Claims

1. Method for producing anchor rods (17) from a fiber composite material, wherein, in a solidifying step, a strand (7) made of a curable matrix material (5), in which fibers (1) are embedded, is conveyed to an irradiation device (14) and solidified by an irradiation with light, and wherein the solidified strand (7) is further conveyed into an annealing device (18) and, in a subsequent curing step, is cured by heating to a annealing temperature, wherein a portion of the cured strand (7) forms an anchor rod (17),
**characterized in that** the strand (7), in the solidifying step, is conveyed into or past the irradiation device (14) on a circulating conveyor belt (8) in a depression (10) of the conveyor belt (8) continuous in a conveying direction (9).

2. Method according to claim 1, **characterized in that** the strand (7) is continuously supplied to the irradiation device (14) .

3. Method according to claim 1 or claim 2, **characterized in that** in an impregnating step, a bundle of fibers (1) is impregnated with the matrix material (5) and is brought together into the strand (7), which is subsequently supplied to the irradiation device (14).

4. Method according to claim 3, **characterized in that** the fibers (1) of the bundle, spaced apart from one another, are supplied to an immersing container (4) with the matrix material (5), and the fibers (1) encased with matrix material (5) are brought together into the strand (7) in the immersing container (4), or after departing the immersing container (4).

5. Method according to one of the preceding claims, **characterized in that** the depression (10) of the conveyor belt (8) comprises profiled inner wall regions (11), through which, during the solidifying step, a surface profiling of the strand (7) conveyed therein is effected.

6. Method according to one of the preceding claims, **characterized in that** the conveyor belt (8) consists of a light-transmissive material, and that multiple illumination devices (15) illuminate the strand (7) conveyed on the conveyor belt (8) from various directions.

7. Method according to one of the preceding claims, **characterized in that** additional matrix material (5) is added to the strand (7) via a dosing device (13) before the solidifying step.

8. Method according to one of the preceding claims, **characterized in that**, before, during or after the curing step, the strand (7) is divided into multiple sections, which each form an anchor rod (17).

## Revendications

1. Procédé servant à fabriquer des barres d'ancrage (17) à partir d'un matériau composite à fibres, dans lequel lors d'une étape de solidification, un brin (7) d'un matériau de matrice (5) durcissable, dans lequel sont incorporées des fibres (1), est amené à un dispositif d'irradiation (14) et est solidifié par une exposition à la lumière, et dans lequel le brin (7) solidifié est transféré dans un dispositif de recuit (18) et est durci lors d'une étape de durcissement qui suit par réchauffage à une température de recuit, dans lequel un tronçon du brin (7) durci forme une tige d'ancrage (17), **caractérisé en ce que** le brin (7), lors de l'étape de solidification, est convoyé dans un renfoncement (10) s'entendant en continu, le long du dispositif d'irradiation (14) ou dans celui-ci, sur une bande transporteuse (8) circulant en périphérie dans une direction de convoyage (9) de la bande transporteuse (8).

2. Procédé selon la revendication 1, **caractérisé en ce que** le brin (7) est amené en continu au dispositif d'irradiation (14).

3. Procédé selon la revendication 1 ou la revendication 2, **caractérisé en ce que** lors d'une étape d'imprégnation, un faisceau de fibres (1) est imprégné du matériau de matrice (5) et est regroupé pour former le brin (7), qui est amené ensuite au dispositif d'irradiation (14).

4. Procédé selon la revendication 3, **caractérisé en ce que** les fibres (1) du faisceau sont amenées à distance les unes des autres à un contenant d'imprégnation (4) avec le matériau de matrice (5), et les fibres (1) enveloppées du matériau de matrice (5) sont regroupées dans le contenant d'imprégnation (4) ou après avoir quitté le contenant d'imprégnation (4) pour former le brin (7) .

5. Procédé selon l'une quelconque des revendications précédentes, **caractérisé en ce que** le renfoncement (10) de la bande transporteuse (8) présente des zones de paroi intérieure (11) profilées, par lesquelles un profilage de surface du brin (7) transporté dans celles-ci est provoqué pendant l'étape de solidification.

6. Procédé selon l'une quelconque des revendications précédentes, **caractérisé en ce que** la bande transporteuse (8) consiste en un matériau laissant passer la lumière, et que plusieurs dispositifs d'éclairage (15) éclairent le brin (7) convoyé sur la bande transporteuse (8) depuis différentes directions.

7. Procédé selon l'une quelconque des revendications précédentes, **caractérisé en ce que** du matériau de matrice (5) supplémentaire est ajouté par l'intermédiaire d'un dispositif de dosage (13) au brin (7) avant l'étape de solidification.

8. Procédé selon l'une quelconque des revendications précédentes, **caractérisé en ce que** le brin (7) est divisé avant, pendant ou après l'étape de durcissement en plusieurs tronçons, qui forment respectivement une tige d'ancrage (17).
